# EUROPEAN PATENT SPECIFICATION

(11) **EP 3 129 201 B1**
(45) Date of publication and mention of the grant of the patent: **26.08.2020**
(21) Application number: 15777480.3
(22) Date of filing: 02.04.2015
(51) Int. Cl.: B28B 3/00, C04B 2/02

(54) **PROCESS FOR THE PREPARATION OF MASONRY COMPOSITE MATERIALS**
VERFAHREN ZUR HERSTELLUNG VON MAUERWERKVERBUNDSTOFFMATERIALIEN
PROCÉDÉ POUR LA PRODUCTION DES MATÉRIAUX COMPOSITES DE MAÇONNERIE

(30) Priority: 10.04.2014 GB 201406481
(43) Date of publication of application: 15.02.2017
(73) Proprietor: University Of Malta, Msida MSD2080 (MT)
(72) Inventor: BUHAGIAR, Spiridione, Naxxar, NXR 2293 (MT); MONTESIN, Perit Franco E, Iklin, IKL 9033 (MT)
(74) Representative: Boult Wade Tennant LLP
(86) International application number: PCT/IL2015/050369
(87) International publication number: WO 2015/155769

(56) References cited:
- AT-B- 229 213
- DE-A1- 19 526 541
- GB-A- 1 197 438
- TURGUT ET AL: "Cement composites with limestone dust and different grades of wood sawdust", BUILDING AND ENVIRONMENT, PERGAMON PRESS, OXFORD, GB, vol. 42, no. 11, 12 July 2007 (2007-07-12) , pages 3801-3807, XP022149879, ISSN: 0360-1323, DOI: 10.1016/J.BUILDENV.2006.11.008
- 'Properties of masonry blocks produced with waste limestone sawdust and glass powder construction and building materials' P TURGUT vol. 22, 2008, pages 1422 - 1427, XP022655001
- P TURGUT: 'Masonry composite material made of limestone powder and fly ash powder technology' POWDER TECHNOLOGY vol. 204, 2010, pages 42 - 47, XP027280557

## Description

### TECHNOLOGICAL FIELD

The invention concerns the reconstitution of particulate limestone into masonry composite materials.

### PRIOR ART

References considered to be relevant as background to the presently disclosed subject matter are listed below:
**[1]** Vella and Cemillri, Xjenza 2005, 10, 47-54
**[2]** Galetakis and Raka, Minerals Engineering 2004, 17, 355-357
**[3]** Galetakis et al., Construction and Building Materials 2012, 26, 122-130
**[4]** Turgut, Materials and Structures 2008, 41, 805-813
**[5]** Turgut, Journal of Cleaner Production 2012, 37, 361-367
**[6]** AT 229213 B relates to a mortar mix for the production of limestone concrete.
**[7]** Turgut, Building and Environment 2007, 42, 3801-3807 presents a parametric experimental study which investigates the potential use of limestone powder wastes (LPW) and wood sawdust wastes (WSW) combination for producing a lightweight composite as a building material
**[8]** DE 19526541 A relates to mineral, fibre-reinforced composite materials and to processes for their production.
**[9]** GB 1197438 A relates to concrete mixes, suitable for use in the production os concrete articles by a pressing process.

Acknowledgement of the above references herein is not to be inferred as meaning that these are in any way relevant to the patentability of the presently disclosed subject matter.

### BACKGROUND

The increasing demand of building materials has caused increased quarrying activity of natural limestone around the world. Particulate limestone waste, having several grades of particle size, is a resulting side-product of the quarrying process [1]. Such particulate side-products are used as additives in the concrete and paving industries, utilizing the fine and coarse fractions of particulate limestone. However, intermediate size fractions, which constitute the main limestone querying waste product, typically require further processing of particle size reduction in order to further utilize the limestone as additives to engineering materials.

In recent years, several studies have been conducted, addressing the utilization of limestone powdered waste as a raw material for building products, such as concrete mixtures, aggregate additives for paving, additives to masonry mixes, etc. These typically involve mixing fine powders of limestone with sand or additional aggregated material, along with different binders and additives **[2-5]**.

Commonly, cement-based compositions are utilized as binders for the limestone powders or aggregates, requiring the addition of water to facilitate processing and hardening of the mixtures. Several researches focusing on the properties of such mixtures showed that the use of a high water-to-cement ratio of the tested compositions **[2-3]** resulted in high shrinkage and creep of the hardened concrete in limestone-based building bricks.

With the increasing production of limestone-based powdered waste and the desire for sustainable building materials, there is a need for processes utilizing intermediate size particulate limestone waste, as well as products comprising them.

### GENERAL DESCRIPTION

The present invention aims at providing processes for the preparation of ***masonry composite materials,*** i.e. materials utilized in building engineering structures, such as building blocks, roofing tiles, paving slabs, etc.

Therefore, in one of its aspects, the invention provides a process for the preparation of a masonry composite material according to claim 1 in the claims appended hereto. The invention provides a process for the preparation of a masonry composite material, comprising:
**(a)** mixing at least one type of absorbable mineral composition in particulate form, with at least one type of cement composition and a quantity of water to thereby obtain a first mixture; at least 50 % weight of the absorbable mineral composition particles having a size of less than about 2mm; wherein the absorbable mineral composition is limestone; the absorbable mineral composition having a liquid absorbance of at least 25% by weight as measured by British Standards BS EN 1925:1999 or BS EN 13755:2008; the cement being present in the first mixture in an amount of between 5 and 15 wt%, and said quantity of water is between about 15 and 30 wt% of the total weight of the first mixture;
**(b)** transferring the first mixture into a mold having a predetermined shape;
**(c)** applying pressure of between 5 and 20 N/mm² at a load rate of between about 0.5 and 2 N/mm²/sec onto the first mixture for draining at least 10 vol% of liquid from the first mixture, thereby providing a drained first mixture; said draining of at least 10 vol% liquid denotes draining of at least 10 vol% from the total amount of liquid components in said first mixture prior to application of said pressure and
**(d)** curing said drained first mixture under curing conditions permitting to obtain said masonry composite material, the masonry composite material having a water content of up to 10 wt% water.

In some embodiments, at least 15% of liquid is drained from the first mixture at step **(c)**.

In some embodiments, the first mixture at step (a) has an initial weight, the drained first mixture has an intermediate weight after step (c),wherein said intermediate weight is smaller by at least 2.5% from said initial weight.

The main component of the masonry composite material is absorbable mineral composition in particulate form; wherein the absorbable mineral composition is limestone. The term ***mineral composition*** refers to any composition of matter composed of mineral materials, such as carbonate-based minerals, silicates, aluminates, oxides, etc., and any mixture thereof. Therefore, as described herein, said at least one type of absorbable mineral composition comprises at least one of carbonate-based minerals, silicates, aluminates, oxides and any mixture thereof.

The ***absorbable*** mineral composition of the invention is characterized by having liquid absorbance of at least 25% by weight of the mineral composition. In the context of the present disclosure, the absorbable mineral composition is capable of absorbing and retaining at least 25% by wt. of liquid (for example water) based on its initial weight. Thus mineral compositions suitable for carrying out the invention are those defined as having the desired absorbability, i.e. being absorbable mineral compositions having liquid absorbance of at least 25% by weight.

As a person of skill would appreciate, absorbablity of the absorbable mineral composition may be determined by any suitable technique known in the art. In accordance with the invention, the absorabability of the absorbable mineral composition is determined according to British Standards BS EN 1925:1999 (*Natural stone test methods: Determination of water absorption coefficient by capillary*) or BS EN 13755:2008 (*Natural stone test methods: Determination of water absorption at atmospheric pressure*).

The absorbable mineral composition is limestone (such as Globigerina Limestone).

In particular, the at least one absorbable mineral composition is limestone in particulate form. ***Limestone*** is a sedimentary rock, comprised mostly of different ratios of calcium carbonate (CaCO₃) crystals. Calcite (trigonal calcium carbonate) is the predominant crystalline polymorph composing naturally occurring limestone [3], with trace amounts of aragonite (orthorhombic calcium carbonate), vaterite (hexagonal calcium carbonate), dolomite (MgCa(CO₃)) and quartz.

Non-limiting examples of limestone types are Globigerina limestone, Tura Limestone, Mokattam Limestone, Noir Beige, Ashford Black Marble, Aymestry Limestone, Bath Stone, Beer Stone, Blackrock, Blisworth Limestone, Carboniferous Limestone, Charlestown limestone, Corallian Limestone, Cotswold stone, Headington stone, Coniston Limestone, Ketton Stone, Lincolnshire limestone, Portland Limestone, Istrian stone, Solnhofen limestone, Jura limestone, Capri limestone, Meleke, Jerusalem stone, Brassfield Formation, Columbus Limestone, Coquina, Indiana limestone, Harrodsburg limestone, Kaibab Limestone, Kasota limestone, Keyser Limestone, St. Louis Limestone, Keystone limestone, Greenbrier Limestone, Algonquin Limestone, Eramosa Limestone, Wallabi Limestone, Oamaru stone, and others.

In some embodiments the limestone is Globigerina limestone.

Other types of absorbable mineral compositions as described herein may be various types of silicate or aluminate minerals.

The absorbable mineral composition, which is limestone, utilized in the processes of the invention is of ***particulate form***, i.e. loose particles, wherein at least 50 wt% of the absorbable mineral material particles being of less than about 2mm in size. In some embodiments, at least 50 wt% of the absorbable mineral material particles are of less than 1 mm in size, less than 0.5 mm in size, less than 0.25 mm in size, or even less than 0.125 mm in size.

It should be noted that the particle size may be measured by any method known to a person skilled in the art. The term ***particle size*** refers to the measured diameters of the particles. In case of non-spherical particles (e.g. elongated particles), the term relates to the length of the longest axis of the particle.

The absorbable mineral composition particles are mixed with at least one type of cementitious composition and a quantity of water to form a first mixture. ***Cement compositions,*** within the context of the present invention, relates to compositions of matter which undergo hydraulic cementation, being cement blends which harden upon hydration, resulting in a chemical reaction between anhydrous cement powder and water. A typical cement blend mainly comprises calcium oxide (CaO or quicklime) and gypsum (CaSO₄·2H₂O), as well as various calcium silicate and calcium aluminate additives.

In some embodiments, said at least one type of cement composition is selected from ASTM C150 Type I Portland cement, ASTM C150 Type II Portland cement, ASTM C150 Type III Portland cement, ASTM C150 Type IV Portland cement, ASTM C150 Type V Portland cement, EN 197-1 Portland cement, EN 197-1 Portland-composite cement, Blastfurnace cement, Pozzolanic cement, and white Portland cement.

In other embodiments, the cement composition is EN 197-1 Portland-composite cement (CEM II).

In accordance with the invention, the cement composition constitutes between 5 and 15 % by weight of the total weight of the first mixture.

As noted above, the absorbable mineral composition and cement composition are mixed with a quantity of water. In the case of the present invention, the ratio of water to cement composition is at least 1:1, typically the at least 1.5:1, and preferably at least 2:1 (i.e. 2 parts water per 1 part cement). Thus, water is added to the mixture resulting in a percentage weight of water higher than percentage weight of cement composition in the first mixture. Without being bound by theory, such a high content of water results in a more homogeneous distribution of components in the mixture and facilitates improved processability of the mixture.

In accordance with the invention, said quantity of water is between about 15 and 30 % weight of the total weight of the first mixture.

Once formed, the first mixture is transferred into a mold (or a plurality of molds), having a predetermined shape. The shape of the mold may be any desired shape, symmetric (such as a cube or a cylinder) or asymmetric, and may or may not comprise perforations to enable drainage of liquid from the mixture contained in the mold. In addition, the interior surface of the mold may be lined with a layer of absorbing material, such as felt or paper. The mold is typically made of a material of high strength, such as metal, ceramics, composite materials, etc.

The first mixture may be transferred into the mold in a single operation, i.e. transfer a single quantity of mixture for filing the entire inner volume of the mold; or batch-wise, wherein after each batch the mixture is slightly compressed, until the volume of the mold is entirely filled with the mixture.

Pressure is then applied to the first mixture contained in the mold in order to drain liquid from the mixture. The pressure may be applied uniaxially, biaxially or hydrostatically, under a constant load rate, and maintained for a period of time in order to drain at least 10 vol%, typically at least 15 vol%, of liquid from the first mixture, thereby obtaining a ***drained mixture.*** In some embodiments, the pressure is maintained for a period of time sufficient to drain at least 20 vol% of liquid from the first mixture. In other embodiments, the pressure is maintained until at least 25 vol% of liquid is drained from the first mixture. It is to be understood that the amount of drained liquid is relative to the amount of liquid components introduced into the first mixture; i.e. in processes of the invention, at least 10 vol% of liquid refers to at least 10 vol% from the total amount of liquid components in the first mixture prior to application of the compression.

The drained liquid comprises predominantly water; however it may also comprise traces of soluble, partially-soluble or suspended components existing in the first mixture. When referring to draining of at least 10 vol% liquid to obtain a drained mixture, the term ***liquid*** refers the total amount of material drained from the mixture, namely water and traces of soluble, partially-soluble or suspended components.

In accordance with the invention, said pressure is between about 5 and 20 N/mm² and applied at a load rate of between about 0.5 and 2 (N/mm²)/sec.

Upon completion of the pressure application, the drained mixture is cured, namely left to harden, under curing conditions permitting to obtain said masonry composite material.

In some embodiments, said curing conditions are at least one of elevated temperature, elevated humidity, and a period of time. In such embodiments, the period of curing time may be between about 5 and 30 days. In other embodiments, the period of curing time may be between about 7 and 28 days.

In other embodiments, the elevated curing temperature may be between about 20 and 120°C.

The processes of the invention may comprise, by some embodiments, a step of demolding the drained first mixture from the mold after applying said pressure (i.e., a step **(c')** between steps **(c)** and **(d)).** Thus, in some embodiments, the drained mixture is cured after demolding.

The control of the content of water in the masonry composite material may also be determined by the weight difference between the ***initial weight**,* i.e. the weight of the first mixture after completion of mixing, and the ***intermediate weight*** of the masonry composite material after completion of compressing. Thus, in an aspect of the invention, the process is characterized by an intermediate weight which is smaller by at least 2.5% from the initial weight. In the context of the present disclosure it is to be understood that the difference between the initial weight and the intermediate weight is due to draining of liquid from the first mixture resulting from the compression applied on the first mixture. Namely, in some embodiments, the weight difference of at least 2.5% between the initial weight and the intermediate weight is equal to draining of at least 10% of liquid from the first mixture, relative to the amount of liquid components introduced into the first mixture prior to compression.

In accordance with the invention, the water content in the masonry composite material is up to 10 % weight of the total weight of the masonry composite material.

In some other embodiments, the water content in the masonry composite material (i.e. after curing) is up to 7.5 wt%, up to 5wt%, up to 2.5 wt% or even up to 1 wt% of the total weight of the masonry composite material.

Once obtained by processes of the invention, the masonry composite material of the invention may be further processed to obtain reconstituted masonry composite material. Thus, the processes of the invention may further comprise a reconstitution cycle for further processing the masonry composite material. In some embodiments, such a reconstitution cycle may comprise the steps of:
**(e)** comminuting the masonry composite material obtained in step **(d)** to a particle size of between about 0.35 and 2 mm, to thereby obtained comminuted masonry composite material;
**(f)** mixing the comminuted masonry composite material with water and at least one cement binder (e.g. Portland cement) to thereby obtain a second mixture,
**(g)** applying pressure onto the second mixture for draining at least 10 % of liquid from the second mixture thereby obtaining a second drained mixture; and
**(h)** curing said second drained mixture under conditions permitting to obtain a reconstituted masonry composite material.

In some embodiments, at least 15% of liquid is drained from the second mixture at step **(g).**

In other embodiments, the weight ratio between the water and said cement binder in the second mixture is at least about 1:1, 1.5:1, or even 2:1.

The reconstitution cycle, by some embodiments, may be repeated at least one time. In other embodiments, the reconstitution cycle (i.e. steps (e)-(h)) is repeated between 1 and 5 times, e.g. 1, 2, 3, 4 or 5 times.

The reconstitution cycle may further comprise a step of demolding the second drained mixture from the mold (i.e. step (**g**') between steps (**g**) and (**h**)).

In some embodiments, the water content in the reconstituted masonry composite material (i.e. after curing) is up to 10 %wt, up to 7.5 %wt, up to 5 wt% or even up to 2.5 wt%.

The first and/or second mixtures, by some embodiments, may further comprise at least one additive for controlling or changing the properties of the first mixture, the second mixture, or the masonry composite material. Such additives may be, for example, viscosity-controlling agents, surfactants, stabilizers, hardening accelerators, hardening inhibitors, and others.

As described herein, there is provided a masonry composite material prepared by a process as herein described.

As described herein, there is provided a masonry composite material comprising at least one type of absorbable mineral composition of which at least 50 % weight being particles with a size of less than 2 mm, at least one type of cement composition, and up to 10 wt% water, the masonry composite material having compression failure strength of at least 7 N/mm² at a load rate of 0.1 (N/mm²)/sec.

As described herein, the masonry composite material has compression failure strength of between about 7 N/mm² and 30 N/mm² at a load rate of 0.1 (N/mm²)/sec.

As described herein, the masonry composite material has a density of between about 1800 and 2200 Kg/m³.

As described herein, said at least one type of absorbable mineral composition comprises at least one of carbonate-based minerals, silicates, aluminates, oxides and any mixture thereof.

The absorbable mineral composition is limestone (such as Globigerina Limestone).

According to some embodiments, said at least one type of cement composition is selected from ASTM C150 Type I Portland cement, ASTM C150 Type II Portland cement, ASTM C150 Type III Portland cement, ASTM C150 Type IV Portland cement, ASTM C150 Type V Portland cement, EN 197-1 Portland cement, EN 197-1 Portland-composite cement, Blastfurnace cement, Pozzolanic cement, and white Portland cement.

In other embodiments, the cement composition is EN 197-1 Portland-composite cement (CEM II).

As described herein, the at least one type of cement is of a quantity of between about 5 and 15 % weight of the total weight of the masonry composite material.

As described - but not claimed - herein, there is provided a process for the preparation of a masonry composite material, comprising:
**(a)** mixing at least one type of absorbable mineral composition in particulate form, with at least one type of cement composition and a quantity of water to thereby obtain a first mixture; at least 50 % weight of the limestone particles having a size of less than about 2mm;
**(b)** transferring the first mixture into a mold having a predetermined shape;
**(c)** applying pressure onto the first mixture for draining at least 10% of liquid from the first mixture, thereby providing a drained first mixture; and
**(d)** curing said drained first mixture under curing conditions permitting to obtain said masonry composite material,
the masonry composite material comprising up to 10 wt% water, and has compression failure strength of at least 7 N/mm² at a load rate of 0.1 (N/mm²)/sec.

As described herein, there is provided a structure comprising the masonry composite material as herein described.

As used herein, the singular form "***a***", "***an***" and "***the***" include plural references unless the context clearly dictates otherwise. The term "***about***" is meant to encompass deviation of ±10% from the specifically mentioned value of a parameter, such as temperature, pressure, concentration, etc. Whenever a numerical range is indicated herein, it is meant to include any cited numeral (fractional or integral) within the indicated range.

The phrases **"*ranging*/*ranges between***" a first indicate number and a second indicate number and "ranging/ranges from" a first indicate number "to" a second indicate number are used herein interchangeably and are meant to include the first and second indicated numbers and all the fractional and integral numerals therebetween. It should be noted that where various embodiments are described by using a given range, the range is given as such merely for convenience and brevity and should not be construed as an inflexible limitation on the scope of the invention. Accordingly, the description of a range should be considered to have specifically disclosed all the possible sub-ranges as well as individual numerical values within that range.

### BRIEF DESCRIPTION OF THE FIGURES

In order to better understand the subject matter that is disclosed herein and to exemplify how it may be carried out in practice, embodiments will now be described, by way of non-limiting example only, with reference to the accompanying Figures, in which:
**Fig. 1** shows particle size distribution of limestone particles and comminuted particulate limestone waste.
**Fig. 2** shows compression failure strength at different curing periods of masonry composite materials of the invention.

### DETAILED DESCRIPTION OF EMBODIMENTS

Compression failure strength of all tested samples described below was tested at a constant load rate of 0.1 (N/mm²)/sec.

### Reference samples

### Reference set 1 (samples 1-4)

Reference set 1 included compositions comprising a cementitious binder, as well as conventional aggregate material typically used in masonry blocks.

Mixtures of the compositions presented in **Table 1** were molded into 150×150×150 mm molds, lined with a cardboard liner. A perforated PVC tube was positioned at the center of each mold in order to assist water drainage during compaction.

The dry materials were put into a mixer and then the water was poured in slowly during the mixing. The powdered limestone used was characterized by a fraction of about 50% by weight of the sample having a particle size ranging between 0.045mm and 0.063mm. The mixing was then carried out for approximately 10 minutes. Then and the mixtures were initially manually compacted into the molds.

**Table 1: Reference set 1 - Mixture compositions**

| **Mix. No.** | **Binder** | | **Powdered limestone** | | **Fine aggregate** | | **Coarse aggregate** | | **Water** | |
|---|---|---|---|---|---|---|---|---|---|---|
| | **% vol** | **wt. (g)** | **% vol** | **wt. (g)** | **% vol** | **wt. (g)** | **% vol** | **wt. (g)** | **% vol** | **wt. (g)** |
| 1 | 2 | 1465 | 2 | 1403 | 2.5 | 2390 | 2.5 | 1930 | 2 | 1620 |
| 2 | 2 | 1470 | 2 | 1412 | 1.5 | 1460 | 3 | 2363 | 2 | 1647 |
| 3 | 2 | 1453 | 2 | 1364 | 1.5 | 1458 | 3 | 2412 | 1.2 | 1235 |
| 4 | 2 | 1453 | 2 | 1364 | 1.5 | 1458 | 3 | 2412 | 1.5 | 1235 |

After initial compaction, the mixtures were compressed in accordance with the compression parameters given **Table 2.**

**Table 2: Reference set 1 - compression parameters and test results**

| **Mix. No.** | **Compression load (kN)** | **Compression time (min)** |
|---|---|---|
| 1 | 15 | 30 |
| 2 | 30 | 30 |
| 3 | 70 | 90 |
| 4 | 70 | 30 |

After demolding, it was observed that considerable surface cracking occurred, likely due to surface shrinkage of the mix. The greater percentage of surface cracks occurred on the exposed surface of the test cube; however, small surface cracks were observed on the cast faces of the cube.

The samples were weighed before oven curing, each sample was oven cured for a period of 10 days at a controlled temperature of 34°C. Each sample was weighed daily to determine the loss in water during curing. The samples were removed from the oven after ten days of curing and allowed to air cure for a further seven days, during this period it was observed that the sample weight once again increased, indicating that the material may be hygroscopic.

Testing of the cubes was carried out in a cube crushing machine. The cubes were placed in the test machine with the draining tube located horizontally through the specimen, facing outward from the compression machine. By positioning the sample in this manner it was ensured that the sample would be loaded through two of the parallel faces of the cube, and also allowed observation of the effects of leaving the draining tube within the test block. Results of testing results are given in the **Table 4** below.

**Table 4** shows that relative density of each mix as compared to the density of Globigerina Limestone (1750 kg/m³). It can be seen that the mixes with a smaller proportion of water used during mixing obtained a greater density of sample. In addition using a greater compressive force during compaction also yields a higher density block. The density of individual cubes may have a direct effect on the compressive strength during testing.

It can be seen that the reference samples of set 1 have a range of compressive strengths varying between 1.36 N/mm² and 3.89 N/mm². The sample with the highest density (sample 3), having the greatest compaction load, with the least water content, using a 5% cement binder has in fact provided the highest compressive strength. Similarly, sample 4, was subjected to an identical compaction load, and has the same water content; however, the cement has been replaced by polyarcylamide. The resulting loss in strength is about 22%.

### Reference set 2 (sample 5)

Reference set 2 included a composition based on powdered limestone without any aggregate material. Samples were produces without exerting any compression test after molding. A composition comprising 5815g powdered limestone, 675g Portland cement (CEM II), and 1500 ml of water was used. The powdered limestone used was characterized by a fraction of about 50% by weight of the sample having a particle size ranging between 0.045mm and 0.063mm.

Cubic test molds were filled in three layers and extensively tamped to remove entrapped air. The mold was left to stand for 2 days before de-molding of the cube. The cube was very wet to the touch, and after a further 5 days of air curing, the cube was still wet to the touch, indicating that a substantial amount of water was still present in the cube. The cube was then subjected to a compressive force to failure, failure occurred at a load of 77.8kN (3.45 N/mm²), substantially lower that all other samples having an equivalent percentage of cement, as will be shown below. The density was calculated to be 1778 kg/m³. The lack of a compaction load produced a very low compressive strength, with a different failure mode when compared to higher strength cubes (further discussed below). Air cavities were observed in the solidified cube.

### Compressed samples (samples 6-11)

Cubic samples (numbered 6-11) of app. 150×150×150 mm were prepared from different mixtures and subjected to different compression parameters after molding and different curing conditions. Data regarding samples 6-11 is provided in **Table 3.**

**Table 3: preparation parameters of samples 6-11**

| **Sample no.** | **Composition** | | | **Compression** | | | **Curing** |
|---|---|---|---|---|---|---|---|
| | **Powdered limestone** | **Binder** | **Water (ml)** | **Load (kN)** | **Duration (min.)** | **Liquid extraction** | |
| 6 (Ref) | 4687g | 937g Clay | 1875 | 30 | 60 | N/A | 7 days, RT |
| 7 (Ref) | 4687g | 937g Clay | 1875 | 30 | 60 | N/A | 7 days, 30°C |
| 8 | 6710g | 450g CEM II | 1800 | 100 | 60 | 440 ml | 7 days, RT |
| 9 | 5815g | 675g CEM II | 1500 | 150 | 60 | 300 ml | 7 days, RT |
| 10 | 5815g | 675g CEM II | 1500 | 300 | 5 | 200 ml | 7 days, RT |
| 11 | 5740g | 1012g CEM II | 1800 | 150 | 60 | 300 ml | 7 days, RT |

The powdered limestone used was characterized by a fraction of about 50% by weight of the sample having a particle size ranging between 0.045mm and 0.063mm. Crushing strength and density were measured for each sample. Results are provided in **Table 4.**

**Table 4: Crushing strength and density results for samples 1-11**

| **Sample no.** | **Density (Kg/m³)** | **Density ratio*** | **Load application area (mm²)** | **Failure load (kN)** | **Max. strength (N/mm²)** | **Water stability** |
|---|---|---|---|---|---|---|
| 1 | 1728 | 0.96 | 17630 | 2.4 | 1.36 | |
| 2 | 1830 | 1.02 | 19045 | 52.9 | 2.78 | |
| 3 | 1872 | 1.04 | 19050 | 74.1 | 3.89 | |
| 4 | 1809 | 1.01 | 19350 | 58.5 | 3.02 | |
| 5 | 1778 | 0.98 | 22500 | 77.8 | 3.45 | Disintegrated |
| 6 | 1736 | 0.96 | 15352 | 31.9 | 2.08 | Disintegrated |
| 7 | 1992 | 1.10 | 16986 | 21.3 | 1.25 | Disintegrated |
| 8 | 1990 | 1.10 | 19304 | 91.6 | 4.78 | Stable |
| 9 | 1998 | 1.11 | 20100 | 122.5 | 6.09 | Stable |
| 10 | 2041 | 1.13 | 19456 | 162.7 | 8.36 | Stable |
| 11 | 2352 | 1.30 | 15450 | 197.2 | 12.76 | Stable** |

| | | | | | | |
|---|---|---|---|---|---|---|
| * Density of natural limestone 1630 - 7 kg/m³: 1800 kg/m³ used as reference ** No disintegration observed after 7 days of immersion in water | | | | | | |

From the results it is evident that increasing the cement and water contents increased the compressive strength of the mixture. Further, increasing the compaction load seems to increase the compressive strength of the mixture. Decreasing the content of cement from 15% to 10%, but increasing the compaction load from 150kN to 300kN also gives a relative increase in the sample compressive strength, 6.09 compared to 8.36 N/mm².

### Crushed limestone waste

Tests 1-11 detailed above used powdered natural limestone as the main absorbable mineral composition of the mix. As it is also desired to recycle limestone-based building waste and to produce a hardwearing and durable material suitable for reuse in the building industry, samples with crushed limestone-based building waste were tested.

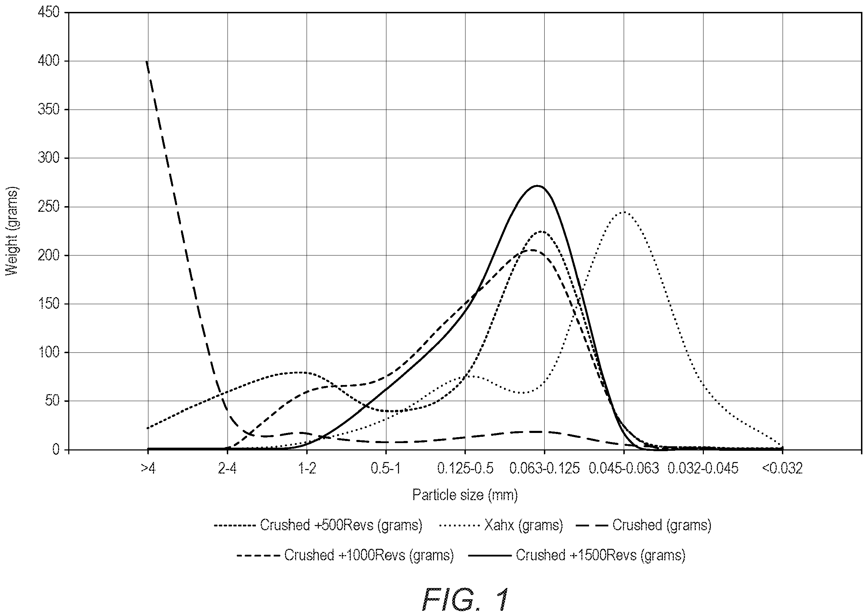

Therefore, limestone-based building waste was crushed under different parameters to obtain powdered limestone-based waste of various particle sizes, as shown in **Fig. 1****.** For all samples, the average particle size obtained was larger than that used for the preparation of samples 1-11 above, with a predominant fraction of particles between 0.063 and 0.125mm.

A number of tests were carried out to establish the effects of particle size on crushing strength of the sample. The resulting samples produced an acceptable level of crushing strength, which suggests that the relatively coarse particle sizes obtained from the crushing process do not have a detrimental effect on the crushing strength of the reconstituted material.

### Effect of pressure and curing time on crushing strength (samples 12-19)

Another parameter that was investigated was effect on pressure applied during the consolidation process, and the effect that pressure has on the free drainage of the free water in the mix.

Samples molded in 100 mm diameter steel cylinders were prepared. The samples consisted of recycled graded limestone powder, CEMII cement and water. The reduced physical dimension of the sample made it possible to remove the central PVC drainage tube that was used in the 150mm cubic samples. This approach to compaction was also favored for the fact that the compression loads used during testing were also applied in the same direction as the initial compaction forces used to produce the sample. A water absorbent lining was used to facilitate drainage of the free water in the mixture. On average, 10-15% liquid was drained from the mixturesduring application of compression.

The samples were cured for different periods of time; each cylindrical sample, once attaining the required curing age, was faced to ensure as parallel a surface as possible, thus avoiding any undesired stress concentration during testing. The load rate used during testing was 0.1 (N/mm²)/sec.

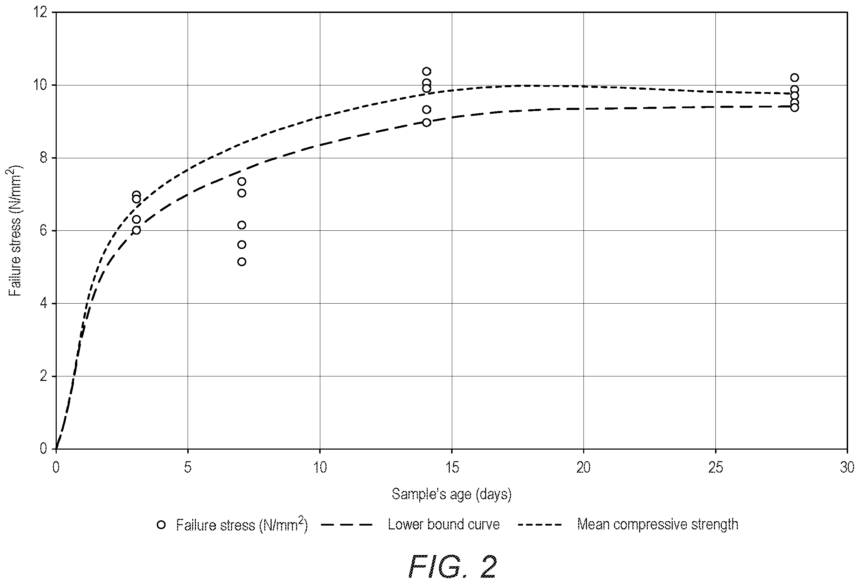

Eight specimens (samples 12-19) were produced, each tested after 3, 7, 14 and 28 days of curing. In addition to these tests, a number of tests were carried out using crushed waste Globigerina limestone as the main constituent of the mix, of different particle distributions and sizes, the size varied between 0.35mm and 2 mm. The results of the tests are presented in **Table 5** and **Fig. 2****.** The samples were all compressed to a load of 100 kN. The samples were tested in a compression machine and loaded at a rate of 0.1 (N/mm²)/sec.

**Table 5: Crushing and density results for samples 12-19**

| **Sample no.** | **Mean failure stress at 3 days (N/mm²)** | **Mean failure stress at 7 days (N/mm²)** | **Mean failure stress at 14 days (N/mm²)** | **Mean failure stress at 28 days (N/mm²)** |
|---|---|---|---|---|
| 12 (W20-C10-P100-T0) | 6.64 | 6.27 | 9.75 | 9.75 |
| 13 (W20-C10-P100-T30) | 7.75 | 10.3 | 11.63 | 14.09 |
| 14 (W28-C10-P100-T0) | 6.81 | 8.09 | NA | 12.3 |
| 15 (W28-C10-P100-T30) | 6.75 | 9.68 | NA | 14.67 |
| 16 (W20-C10-P100-T0-3P) | 6.98 | 9.13 | 9.25 | 13.21 |
| 17 (W20-C10-P100-T0-22P) | NA | 7.74 | NA | 11.27 |
| 18 (W20-C10-P100-T0-84P) | NA | 4.28 | NA | 6.7 |
| 19 (W20-C10-P100-T0-GW) | NA | 9.5 | NA | NA |

From **Table 5** it can be observed that samples subjected to a prolonged compaction load display a higher compressive strength during unit testing. The lowest failure stress obtained through testing of samples which had been cured for a period of 28 days varies from 9.75N/mm² (compaction load reached and unloaded) to 14.67 N/mm² (compaction load held for a period of 30 minutes on the sample before releasing).

The compressive strength of the masonry composite material of the invention was evaluated in comparison to quarried limestone blocks.

A number of limestone blocks have been obtained from a known quarry. Each limestone block was labeled and several cylinders of 100mm diameter have been extracted. The test samples were all cut to a height of 100mm, and the compressive force applied perpendicular to the bedding planes of the limestone. From tests carried out it was observed that the compressive strength of Globigerina building stone varied between 11.57N/mm² to 15.78 N/mm², giving an average of 13.89N/mm². When compared to the composites of the invention, it can be seen that the compressive strengths of the compositions of the invention are at least comparable, and in some samples even superior, to those of queried natural limestone blocks.

### Reconstitution of the masonry composite material

Determination of the repeatability of the recycling/reconstitution process (i.e. reconstitution cycle) was evaluated. A number of cylinders of the masonry material of the invention where prepared and tested to failure. The resulting material was once again reprocessed, recompressed and tested to failure. This process was repeated three times (i.e. the recycled material was once again crushed, graded, mixed and reconstituted). The results are provided in **Tables 6-8.** Water, cement and limestone proportions were adjusted during subsequent reconstitution cycles, to maintain a constant water, cement and limestone ratio as in the original masonry material used in each samples' set. Liquid draining for each reconstitution samples were averaged to be between 10% and 15%.

**Table 6: Crushing test results for samples after 1^{st} cycle of reconstitution (average sample compression stress of 12.05 N/mm²; average density of samples - 2038 kg/m³)**

| **Sample No.** | **Failure stress (N/mm²)** | **Load (kN)** |
|---|---|---|
| 1.1 | 28.1 | 220.7 |
| 1.2 | 24.48 | 192.3 |
| 1.3 | 23.38 | 183.6 |
| 1.4 | 18.78 | 147.5 |
| 1.5 | 23.23 | 182.4 |
| 1.6 | 18.08 | 142 |
| 1.7 | 22.02 | 173 |
| 1.8 | 17.31 | 136 |
| 1.9 | 22.87 | 179.6 |
| 1.10 | 27.5 | 216 |
| 1.11 | 23.12 | 181.6 |
| 1.12 | 25.5 | 196.7 |
| **Average** | **22.83** | **179.28** |

**Table 7: Crushing test results for samples after 2^{nd} cycle of reconstitution (average sample compression stress of 12.03 N/mm²; average density of samples - 1979 kg/m³)**

| **Sample No.** | **Failure stress (N/mm²)** | **Load (kN)** |
|---|---|---|
| 2.1 | 20.39 | 160.1 |
| 2.2 | 27.8 | 218.3 |
| 2.3 | 24.81 | 194.9 |
| 2.4 | 26.22 | 205.9 |
| 2.5 | 23.82 | 187.1 |
| 2.6 | 22.7 | 178.8 |
| 2.7 | 26.21 | 205.9 |
| 2.8 | 24.16 | 189.8 |
| 2.9 | 25.76 | 202.3 |
| 2.10 | 24.08 | 189.1 |
| 2.11 | 21.29 | 167.2 |
| 2.12 | 22.95 | 180.2 |
| **Average** | **24.18** | **189.97** |

**Table 8: Crushing test results for samples after 3^{rd} cycle of reconstitution (average sample compression stress of 11.98 N/mm²; average density of samples - 1935 kg/m³)**

| **Sample No.** | **Failure stress (N/mm²)** | **Load (kN)** |
|---|---|---|
| 3.1 | 22.88 | 179.7 |
| 3.2 | 21.2 | 166. |
| 3.3 | 20.78 | 13.2 |
| 3.4 | 19.87 | 156.1 |
| 3.5 | 21.92 | 172.1 |
| 3.6 | 24.88 | 195.4 |
| 3.7 | 17.65 | 138.6 |
| 3.8 | 19.18 | 150.6 |
| 3.9 | 20.83 | 163.6 |
| 3.10 | 20.71 | 162.7 |
| 3.11 | 21.36 | 167.8 |
| 3.12 | 20.18 | 158.5 |
| **Average** | **21.05** | **152.07** |

It is evident from **Tables 6-8** that the masonry composite material subjected to repeated reconstitution performs well, with failure strength at least comparable to that of queried natural limestone blocks.

## Claims

1. A process for the preparation of a masonry composite material, comprising:
**(a)** mixing at least one type of absorbable mineral composition in particulate form, with at least one type of cement composition and a quantity of water to thereby obtain a first mixture; at least 50 % weight of the absorbable mineral composition particles having a size of less than about 2mm; wherein the absorbable mineral composition is limestone; the absorbable mineral composition having liquid absorbance of at least 25% by weight as measured by British Standards BS EN 1925:1999 or BS EN 13755:2008; the cement being present in the first mixture in an amount of between 5 and 15 wt%, and said quantity of water is between about 15 and 30 wt% of the total weight of the first mixture;
**(b)** transferring the first mixture into a mold having a predetermined shape;
**(c)** applying pressure of between about 5 and 20 N/mm² at a load rate of between about 0.5 and 2 N/mm²/sec onto the first mixture for draining at least 10 vol% of liquid from the first mixture, thereby providing a drained first mixture; said draining of at least 10 vol% liquid denotes draining of at least 10 vol% from the total amount of liquid components in said first mixture prior to application of said pressure; and
**(d)** curing said drained first mixture under curing conditions permitting to obtain said masonry composite material, the masonry composite material having a water content of up to 10 wt% water.

2. The process of claim 1, wherein at least 15% of liquid is drained from the first mixture at step (c).

3. The process of claim 1 or 2, wherein the first mixture at step (a) has an initial weight, the drained first mixture has an intermediate weight after step (c), wherein the intermediate weight is smaller by at least 2.5% from said initial weight.

4. The process of any one of claims 1-3, wherein said at least one type of cement composition is selected from ASTM C150 Type I Portland cement, ASTM C150 Type II Portland cement, ASTM C150 Type III Portland cement, ASTM C150 Type IV Portland cement, ASTM C150 Type V Portland cement, EN 197-1 Portland cement, EN 197-1 Portland-composite cement (CEM II), Blastfurnace cement, Pozzolanic cement, and white Portland cement, and mixtures thereof.

5. The process of any one of claims 1-4, wherein said process further comprising a step **(c')** between steps **(c)** and **(d),** of demolding the drained first mixture from the mold.

6. The process of any one of claims 1-5, wherein said curing conditions are at least one of elevated temperature, a period of time and elevated pressure, optionally wherein said period of time is between about 5 and 30 days, and/or said elevated temperature is between about 20 and 120°C.

7. The process of any one of claims 1-6, wherein said first mixture further comprises at least one additive, optionally wherein said at least one additive is selected from viscosity-controlling agents, surfactants, stabilizers, hardening accelerators, hardening inhibitors, and mixtures thereof.

8. The process of any one of claims 1-7, further comprising a reconstitution cycle comprising the steps of:
**(e)** comminuting the masonry composite material obtained in step **(d)** to a particle size of between about 0.35 and 2 mm, to thereby obtained comminuted masonry composite material;
**(f)** mixing the comminuted masonry composite material with water and at least one cement binder, to thereby obtain a second mixture,
**(g)** applying pressure onto the second mixture for draining at least 10 vol% of liquid from the second mixture thereby obtaining a second drained mixture; said draining of at least 10 vol% liquid denotes draining of at least 10 vol% from the total amount of liquid components in said second mixture prior to application of said pressure; and
**(h)** curing said second drained mixture under conditions permitting to obtain a reconstituted masonry composite material,
optionally wherein (1) at least 15vol% of liquid is drained from the second mixture at step (g) and/or (2) the water content in the reconstituted masonry composite material is up to 10 % weight.

9. The process of claim 8, further comprising a step **(g')** between steps **(g)** and **(h),** of demolding the second drained mixture from the mold.

## Patentansprüche

1. Verfahren zur Herstellung eines Mauerwerkverbundstoffmaterials, umfassend:
(a) Mischen mindestens eines Typs einer absorbierbaren Mineralzusammensetzung in Teilchenform mit mindestens einem Typ einer Zementzusammensetzung und einer Menge Wasser, um dadurch ein erstes Gemisch zu erhalten; wobei mindestens 50 Gew.-% der Teilchen der absorbierbaren Mineralzusammensetzung eine Größe von weniger als etwa 2 mm aufweisen; wobei die absorbierbare Mineralzusammensetzung Kalkstein ist; wobei die absorbierbare Mineralzusammensetzung ein Flüssigkeitsabsorptionsvermögen von mindestens 25 Gew.-%, gemessen nach den britischen Normen BS EN 1925:1999 oder BS EN 13755:2008 aufweist; wobei der Zement in dem ersten Gemisch in einer Menge zwischen 5 und 15 Gew.-% vorhanden ist; und die Wassermenge zwischen etwa 15 und 30 Gew.-% des Gesamtgewichts des ersten Gemischs beträgt;
(b) Übertragen der ersten Mischung in eine Form mit einer vorgegebenen Gestalt;
(c) Ausüben eines Drucks von zwischen etwa 5 und 20 N/mm² bei einer Belastungsrate von zwischen etwa 0,5 und 2 N/mm²/sec auf das erste Gemisch, um mindestens 10 Vol.-% Flüssigkeit aus dem ersten Gemisch zu drainieren; wodurch ein drainiertes erstes Gemisch bereitgestellt wird; wobei das Drainieren von mindestens 10 Vol.-% Flüssigkeit ein Drainieren von mindestens 10 Vol-% aus der Gesamtmenge der flüssigen Komponenten im ersten Gemisch vor dem Ausüben des Drucks bezeichnet; und
(d) Abbinden des drainierten ersten Gemischs unter Abbindebedingungen, die es erlauben, das Mauerwerkverbundstoffmaterialzu erhalten, wobei das Mauerwerkverbundstoffmaterialeinen Wassergehalt von bis zu 10 Gew.-% Wasser aufweist.

2. Verfahren nach Anspruch 1, bei dem in Schritt (c) mindestens 15 % der Flüssigkeit aus dem ersten Gemisch drainiert werden.

3. Verfahren nach Anspruch 1 oder 2, bei dem das erste Gemisch in Schritt (a) ein Anfangsgewicht hat und das drainierte erste Gemisch nach Schritt (c) ein Zwischengewicht hat, wobei das Zwischengewicht um mindestens 2,5 % kleiner als das Anfangsgewicht ist.

4. Verfahren nach einem der Ansprüche 1-3, bei dem der mindestens eine Typ von Zementzusammensetzung ausgewählt ist aus ASTM C150 Typ I Portlandzement; ASTM C150 Typ II Portlandzement; ASTM C150 Typ III Portlandzement; ASTM C150 Typ IV Portlandzement; ASTM C150 Typ V Portlandzement; EN 197-1 Portlandzement, EN 197-1 Portlandverbundzement (CEM II), Hochofenzement, Puzzolanzement und weißem Portlandzement und Gemischen davon.

5. Verfahren nach einem der Ansprüche 1-4, wobei das Verfahren zwischen den Schritten (c) und (d) ferner einen Schritt (c') des Entformens des drainierten ersten Gemischs aus der Form umfasst.

6. Verfahren nach einem der Ansprüche 1-5, bei dem die Abbindebedingungen mindestens eine von erhöhter Temperatur, einer Zeitspanne und erhöhtem Druck sind, wobei optional die Zeitspanne zwischen etwa 5 und 30 Tagen liegt und/oder die erhöhte Temperatur zwischen etwa 20 und 120°C liegt.

7. Verfahren nach einem der Ansprüche 1 bis 6, bei dem das erste Gemisch ferner mindestens ein Additiv umfasst, wobei optional das mindestens eine Additiv ausgewählt ist aus viskositätssteuernden Mitteln, oberflächenaktiven Mitteln, Stabilisatoren, Härtungsbeschleunigern, Härtungsinhibitoren und Gemischen davon.

8. Verfahren nach einem der Ansprüche 1-7, ferner umfassend einen Rekonstitutionszyklus mit den Schritten:
(e) Zerkleinern des in Schritt (d) erhaltenen Mauerwerkverbundstoffmaterials auf eine Teilchengröße zwischen etwa 0,35 und 2 mm, um dadurch zerkleinertes Mauerwerk-Verbundmaterial zu erhalten;
(f) Mischen des zerkleinerten Mauerwerkverbundstoffmaterials mit Wasser und mindestens einem Zementbindemittel, um dadurch ein zweites Gemisch zu erhalten;
(g) Ausüben von Druck auf das zweite Gemisch, um mindestens 10 Vol.-% der Flüssigkeit aus dem zweiten Gemisch zu drainieren, wodurch ein zweites drainiertes Gemisch erhalten wird;
wobei das Drainieren von mindestens 10 Vol.-% Flüssigkeit das Drainieren von mindestens 10 Vol. % der Gesamtmenge der flüssigen Komponenten in dem zweiten Gemisch vor der Ausübung des Drucks bezeichnet; und
(h) Abbinden des zweiten drainierten Gemisches unter Bedingungen, die es erlauben, ein rekonstituiertes Mauerwerkverbundstoffmaterial zu erhalten,
wobei optional (1) in Schritt (g) mindestens 15 Vol.-% Flüssigkeit aus dem zweiten Gemisch drainiert werden und/oder (2) der Wassergehalt in dem rekonstituierten Mauerwerkverbundstoffmaterial bis zu 10 Gew.-% beträgt.

9. Verfahren nach Anspruch 8, ferner mit einem Schritt (g') zwischen den Schritten (g) und (h), bei dem das zweite dränierte Gemisch aus der Form entformt wird.

## Revendications

1. Procédé de préparation d'un matériau composite de maçonnerie, comprenant les étapes consistant à :
(a) mélanger au moins un type de composition minérale absorbable sous forme particulaire, avec au moins un type de composition de ciment et une quantité d'eau pour obtenir ainsi un premier mélange ; au moins 50 % en poids des particules de composition minérale absorbable ont une taille inférieure à environ 2 mm ; où la composition minérale absorbable est du calcaire ; la composition minérale absorbable ayant une absorbance de liquide d'au moins 25 % en poids telle que mesurée par les normes britanniques BS EN 1925:1999 ou BS EN 13755:2008 ; le ciment étant présent dans le premier mélange en une quantité comprise entre 5 et 15 % en poids, et ladite quantité d'eau est comprise entre environ 15 et 30 % en poids du poids total du premier mélange ;
(b) transférer le premier mélange dans un moule ayant une forme prédéterminée ;
(c) appliquer une pression comprise entre environ 5 et 20 N/mm² à un taux de charge compris entre environ 0,5 et 2 N/mm²/s sur le premier mélange pour égoutter au moins 10 % en volume de liquide du premier mélange, fournissant ainsi un premier mélange égoutté ; ledit égouttage d'au moins 10 % en volume de liquide représente l'égouttage d'au moins 10 % en volume de la quantité totale de composants liquides dans ledit premier mélange avant l'application de ladite pression ; et
(d) durcir ledit premier mélange égoutté dans des conditions de durcissement permettant d'obtenir ledit matériau composite de maçonnerie, le matériau composite de maçonnerie ayant une teneur en eau allant jusqu'à 10 % en poids d'eau.

2. Procédé de la revendication 1, dans lequel au moins 15 % de liquide est égoutté du premier mélange à l'étape (c) .

3. Procédé de la revendication 1 ou 2, dans lequel le premier mélange à l'étape (a) a un poids initial, le premier mélange égoutté a un poids intermédiaire après l'étape (c), où le poids intermédiaire est inférieur d'au moins 2,5 % par rapport audit poids initial.

4. Procédé de l'une quelconque des revendications 1 à 3, dans lequel ledit au moins un type de composition de ciment est choisi entre le ciment Portland de Type I ASTM C150, le ciment Portland de Type II ASTM C150, le ciment Portland de Type III ASTM C150, le ciment Portland de Type IV ASTM C150, le ciment Portland de Type V ASTM C150, le ciment Portland EN 197-1, le ciment composite Portland EN 197-1 (CEM II), le ciment de haut fourneau, le ciment pouzzolanique et le ciment Portland blanc, et leurs mélanges.

5. Procédé de l'une quelconque des revendications 1 à 4, où ledit procédé comprenant en outre une étape (c') entre les étapes (c) et (d), consistant à démouler le premier mélange égoutté du moule.

6. Procédé de l'une quelconque des revendications 1 à 5, dans lequel lesdites conditions de durcissement sont au moins l'une d'une température élevée, d'une période de temps et d'une pression élevée, facultativement où ladite période de temps est comprise entre environ 5 et 30 jours, et/ou ladite température élevée est comprise entre environ 20 et 120°C.

7. Procédé de l'une quelconque des revendications 1 à 6, dans lequel ledit premier mélange comprend en outre au moins un additif, facultativement où ledit au moins un additif est choisi entre des agents de régulation de viscosité, des tensioactifs, des stabilisants, des accélérateurs de durcissement, des inhibiteurs de durcissement, et leurs mélanges

8. Procédé de l'une quelconque des revendications 1 à 7, comprenant en outre un cycle de reconstitution comprenant les étapes consistant à :
(e) broyer le matériau composite de maçonnerie obtenu à l'étape (d) à une taille de particules comprise entre environ 0,35 et 2 mm, pour obtenir ainsi le matériau composite de maçonnerie broyé ;
(f) mélanger le matériau composite de maçonnerie broyé avec de l'eau et au moins un liant de ciment, pour obtenir ainsi un deuxième mélange,
(g) appliquer une pression au deuxième mélange pour égoutter au moins 10 % en volume de liquide du deuxième mélange, obtenant ainsi un deuxième mélange égoutté ; ledit égouttage d'au moins 10 % en volume de liquide représente l'égouttage d'au moins 10 % en volume de la quantité totale de composants liquides dans ledit deuxième mélange avant l'application de ladite pression ; et
(h) durcir ledit deuxième mélange égoutté dans des conditions permettant d'obtenir un matériau composite de maçonnerie reconstitué,
éventuellement dans lequel (1) au moins 15 % en volume de liquide est égoutté du deuxième mélange à l'étape (g) et/ou (2) la teneur en eau dans le matériau composite de maçonnerie reconstitué constitue jusqu'à 10 % en poids.

9. Procédé de la revendication 8, comprenant en outre une étape (g') entre les étapes (g) et (h), consistant à démouler le deuxième mélange égoutté du moule.
